# FASCICULE DE BREVET EUROPEEN

(11) **EP 4 109 694 B1**
(45) Date de publication et mention de la délivrance du brevet: **21.02.2024**
(21) Numéro de dépôt: 22180928.8
(22) Date de dépôt: 24.06.2022
(51) Int. Cl.: H02G 3/32, F16L 3/10, F16L 3/223, H02G 3/04

(54) **BARRE D'ORGANISATION DE CÂBLES EN NAPPE, ENSEMBLE D'ORGANISATION DE CÂBLES COMPRENANT DE TELLES BARRES, ET PROCÉDÉ D ASSEMBLAGE D'UN TEL ENSEMBLE D'ORGANISATION**
KABELFÜHRUNGSLEISTE FÜR FLACHBANDKABEL, KABELFÜHRUNGSANORDNUNG MIT SOLCHEN LEISTEN UND VERFAHREN ZUM ZUSAMMENBAU EINER SOLCHEN FÜHRUNGSANORDNUNG
BAR FOR ORGANISING CABLES INTO A LAYER, ASSEMBLY FOR ORGANISING CABLES COMPRISING SUCH BARS, AND METHOD FOR ASSEMBLING SUCH AN ASSEMBLY FOR ORGANISATION

(30) Priorité: 25.06.2021 FR 2106807
(43) Date de publication de la demande: 28.12.2022
(73) Titulaire: Micab, 76120 Le Grand-Quevilly (FR)
(72) Inventeur: ALONSO, Anthony, 76350 OISSEL (FR)
(74) Mandataire: Fidal Innovation

(56) Documents cités:
- EP-A1- 0 486 442
- WO-A1-96/08063
- JP-U- S58 186 277
- US-A1- 2018 080 579

## Description

### DOMAINE DE L'INVENTION

La présente invention se rapporte au domaine de l'organisation des câbles.

Plus précisément, l'invention se rapporte à un dispositif d'organisation de câbles afin de proposer une organisation des câbles de haut niveau, notamment dans les centres de données, généralement appelés « data centers ».

### ARRIÈRE-PLAN TECHNOLOGIQUE

Un data center comprend en général des équipements informatiques pour le stockage et la restitution de données, mais aussi plus généralement pour la fourniture de services informatiques. Il requiert un grand nombre de connexions, et donc un grand nombre de câbles. Les câbles peuvent avoir des fonctions différentes, notamment l'alimentation, l'arrivée ou la sortie de données, ou encore la gestion d'un service particulier. Il est donc hautement recommandé d'être capable d'identifier les câbles, et de les organiser afin d'éviter tout mauvais raccordement et également afin de gagner en temps à l'installation des câbles.

Il est connu de mettre en place des chemins de câbles ou goulottes afin de supporter les câbles le long d'une paroi verticale, ou à proximité d'un plafond, afin de protéger les câbles et d'éviter que les câbles ne restent au sol. Un chemin de câble peut être réalisé par exemple en un treillis de fils, ou en dalle perforée, ou encore en dalle pleine. Une goulotte est généralement pleine, et de dimension inférieure à un chemin de câbles, mais réalise la même fonction de protection et de support de câbles.

Il est alors connu d'utiliser un dispositif de serrage de câble appelé collier pour maintenir un groupe de câbles ensemble tout le long d'un chemin de câbles ou d'une goulotte. Il existe deux types de colliers : les colliers rigides, généralement métalliques qui comprennent un logement et une patte qui bloquent les câbles dans le logement, et les colliers souples, qui comprennent typiquement une partie souple destinée à venir enserrer un groupe de câble, et deux extrémités plus rigides, utilisées pour la fixation sur un chemin de câbles. Un exemple d'un collier rigide est décrit dans le document GB 2 244 08. Un exemple d'un collier souple est décrit dans le document EP 1 215 788.

Toutefois, les colliers de serrage de câbles ne permettent pas de positionner et maintenir chaque câble enserré par le collier dans une position donnée. En outre, si un câble du groupe doit être changé ou déplacé, il faut ouvrir le collier pour l'ensemble du groupe, ce qui peut occasionner une désorganisation des câbles.

Il existe également des dispositifs de type peigne, permettant de séparer les câbles les uns de autres et de les maintenir dans un certain agencement les uns par rapport aux dans un chemin de câbles ou une goulotte, comme dans les documents FR 3 015 136 et CN 210404610 par exemple. Dans de tels dispositifs toutefois, les câbles sont empilés les uns par rapport aux autres, de sorte que si un câble doit être changé ou déplacé, tous les câbles situés au-dessus doivent être retirés pour accéder au câble en question.

Le document FR3035949 propose un dispositif formé de bras assemblés de manière articulée les uns aux autres, et entre lesquels les câbles sont retenus. Plus précisément, ce dispositif comprend un premier type de bras qui a une fonction de fixation sur un support, un deuxième type de bras comprenant des encoches le long de deux faces opposés pour y loger des câbles et dépourvu de la fonction de fixation sur le support, et un troisième type de bras toujours dépourvu de fonction de fixation sur un support et qui ne comprend des encoches que le long d'une seule face. Ainsi, le dispositif comprend typiquement un assemblage formé successivement d'un bras du premier type, d'un ou plusieurs bras du deuxième type, et enfin un bras du troisième type afin de ferme l'assemblage.

Un tel dispositif pose des problèmes de gestion de stock, puisqu'il requiert la gestion de trois types de bras en fonction du nombre de câbles à supporter, et augmente donc les coûts.

En outre, les bras sont des pièces complexes, impliquant la mise ne place d'une vis pour réaliser l'axe d'une liaison charnière. Les coûts de fabrication sont là encore augmentés.

Enfin, les bras peuvent coulisser le long des câbles afin de, selon ce document, permettre le démêlage des fils. Cependant, ce coulissement implique une perte de garantie de la position du dispositif le long des câbles, de sorte que l'organisation des câbles peut être perdue.

Des barres d'organisation de câbles en nappe sont par ailleurs connues des documents EP0486442A1, JPS58186277U, WO96/08063A1 et US2018/080579A1.

Il existe donc un besoin pour un nouveau dispositif permettant d'organiser des câbles sur leur support avec un haut niveau, et surmontant notamment les inconvénients de l'art antérieur précité.

### RÉSUMÉ DE L'INVENTION

Ainsi, l'invention se rapporte, selon un premier aspect, à une barre d'organisation de câbles en nappe. La barre comprend un corps allongé suivant une direction transversale entre deux portions extrêmes. Le corps présente une surface supérieure et une surface inférieure. De plus, au moins l'une de la surface supérieure ou de la surface inférieure comprend au moins deux encoches, chaque encoche formant passage sensiblement longitudinal pour un câble. La barre comprend en outre :
- sur une première portion extrême, un système de liaison charnière qui comporte, du côté de la surface supérieure, un premier élément de charnière cylindrique formant axe de rotation et qui comporte, du côté de la surface inférieure, un deuxième élément de charnière en creux complémentaire du premier élément de charnière, adapté pour s'engager sur le premier élément de charnière par encliquetage ;
- sur la deuxième portion extrême, un système de verrouillage qui comporte du côté de la surface supérieure un premier élément de verrouillage en saillie et qui comporte du côté de la surface inférieure un deuxième élément de verrouillage en creux adapté pour venir en prise avec le premier élément de verrouillage.

Ainsi, un premier élément de charnière d'une première barre peut être assemblé par encliquetage sur un deuxième élément de charnière d'une deuxième barre, et un premier élément de verrouillage de la première barre peut être retenu par un deuxième élément de verrouillage de la deuxième barre, pour former un ensemble d'organisation de câbles.

La barre d'organisation permet ainsi de tenir des câbles en nappe de manière robuste sur un support, permettant une organisation de niveau élevé pour les câbles, particulièrement adaptée par exemple dans les data centers, et à moindre coût.

Selon différents aspects, il est possible de prévoir l'une et/ou l'autre des caractéristiques ci-dessous prises seules ou en combinaison.

Selon une réalisation, le deuxième élément de charnière et le deuxième élément de verrouillage, en creux, forment un ensemble de fixation sur des fils d'un chemin de câbles.

La barre fait ainsi fonction à la fois d'organisateur de câbles et de système de maintien sur un support, facilitant l'organisation en nappe des câbles sur un support.

Selon une réalisation, les encoches comprennent au moins un élément de retenue individuelle de chaque câble dans l'encoche. Ainsi, les câbles ne peuvent pas bouger dans les encoches, de sorte que la barre est maintenue en position le long des câbles avec une certitude élevée, facilitant l'organisation et son maintien dans le temps.

Selon une réalisation, l'axe de rotation du système de liaison charnière s'étend dans une direction longitudinale, de sorte que deux barres assemblées forment une pince ou mâchoire pour enserrer les câbles. La manipulation des barres et la mise en place des câbles s'en trouvent facilitées.

Selon un mode de réalisation, la barre est monobloc. Sa fabrication s'en trouve facilitée et les coûts encore réduits.

Selon un mode de réalisation, la barre est réalisée en PLA. La barre répond ainsi à des considérations écologiques.

Selon un deuxième aspect, l'invention concerne un ensemble d'organisation de câbles comprenant au moins une première barre et une deuxième barre d'organisation, telles que décrites ci-dessus. Le premier élément de charnière d'une première barre est alors assemblé par encliquetage sur le deuxième élément de charnière d'une deuxième barre. L'ensemble d'organisation peut ainsi prendre, par rotation autour de l'axe de rotation de la liaison charnière :
- une position fermée verrouillée, dans laquelle la première barre et la deuxième barre sont sensiblement parallèles, le premier élément de verrouillage de la première barre étant retenu par le deuxième élément de verrouillage de la deuxième barre ;
- une position ouverte, dans laquelle la surface inférieure de la deuxième barre est éloignée de la première barre.

Selon un mode de réalisation, l'ensemble peut comprendre en outre une barre intermédiaire destinée à être fixée sur un support, la barre intermédiaire comprenant un corps allongé suivant une direction transversale entre deux portions extrêmes. Le corps de la barre intermédiaire présente alors une surface supérieure et une surface inférieure. La barre intermédiaire comprend en outre :
- sur une première portion extrême, du côté de la surface supérieure, un premier élément de charnière cylindrique formant axe de rotation ;
- sur la deuxième portion extrême, du côté de la surface supérieure, un premier élément de verrouillage en saillie ;
- deux griffes de fixation en creux, s'étendant à partir de la surface inférieure, placées entre les deux portions extrêmes, destinées à venir en prise chacune avec un élément d'un support de câbles.

Le deuxième élément de charnière de la première barre peut alors être assemblé sur le premier élément de charnière de la barre intermédiaire, et le deuxième élément de verrouillage de la première barre est retenu sur le premier élément de verrouillage de la barre intermédiaire.

Selon un mode de réalisation, la barre intermédiaire est dépourvue d'encoches formant passage pour des câbles, la rendant plus facile et moins coûteuse à fabriquer, ainsi que visuellement distincte des barres destinées à retenir les câbles.

Selon un troisième aspect, l'invention concerne un procédé d'assemblage d'un ensemble d'organisation sur un support tel que présenté ci-dessus. Le procédé comprend notamment :
- La fixation sur le support d'une première barre d'organisation,
- L'encliquetage du premier élément de charnière d'une deuxième barre d'organisation sur le deuxième élément de charnière de la première barre d'organisation, de manière à former une liaison charnière.

Selon un mode de réalisation, le support est un chemin de câbles de type fils, et la fixation de la première barre sur le support comprend la mise en prise du deuxième élément de charnière sur un premier fil du chemin de câbles et la mise en prise du deuxième élément de verrouillage de la première barre sur un deuxième fil du chemin de câbles.

Selon un mode de réalisation, le support est un chemin de câbles de type fils, et dans lequel l'étape de fixation de la première barre comprend :
- la mise en prise des griffes de fixation de la barre intermédiaire sur des fils du chemin de câbles ;
- l'encliquetage du premier élément de charnière de la barre intermédiaire sur le deuxième élément de charnière de la première barre d'organisation ;
- l'encliquetage du premier élément de verrouillage de la barre intermédiaire sur le deuxième élément d'encliquetage de la première barre d'organisation.

### BRÈVE DESCRIPTION DES DESSINS

Des modes de réalisation de l'invention seront décrits ci-dessous par référence aux dessins, décrits brièvement ci-dessous :
[Fig. 1] est une vue tridimensionnelle de dessous et selon un premier côté d'une barre d'organisation de câbles en nappe selon un mode de réalisation ;
[Fig. 2] est une vue tridimensionnelle de dessous selon un deuxième côté de la barre d'organisation de la figure 1 ;
[Fig. 3a] est une vue suivant une face avant de la barre d'organisation de la figure 1 ;
[Fig. 3b] est une vue de détail de la figure 3a selon le cercle IVb ;

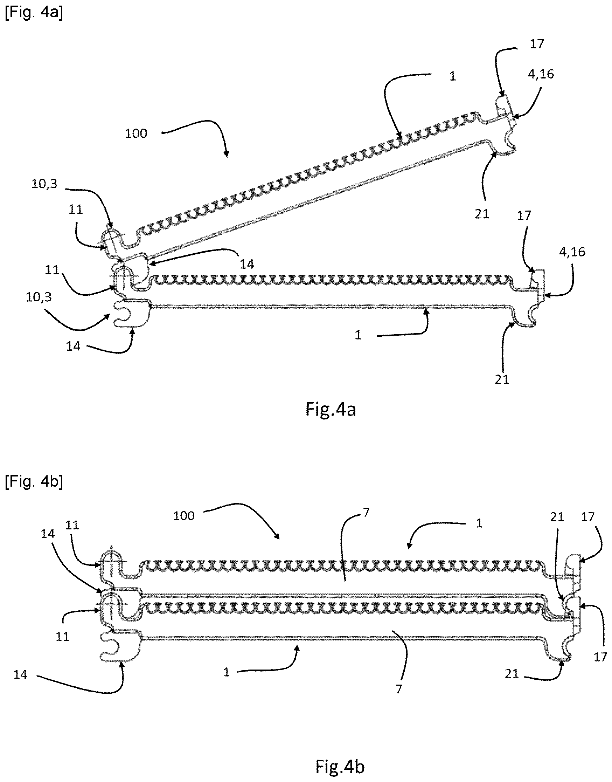

[Fig. 4a] est une vue suivant une face avant de deux barres d'organisation selon la figure 1 assemblées l'une à l'autre, dans une position ouverte ;
[Fig. 4b] est une vue suivant une face avant de deux barres d'organisation selon la figure 1 assemblées l'une à l'autre, dans une position ouverte ;
[Fig. 5] est une vue tridimensionnelle de dessus d'une barre intermédiaire de fixation ;
[Fig. 6] est une vue tridimensionnelle de côté de la barre intermédiaire de la figure 5.
Sur les dessins, des références identiques désignent des objets identiques ou similaires.

### DESCRIPTION DÉTAILLÉE

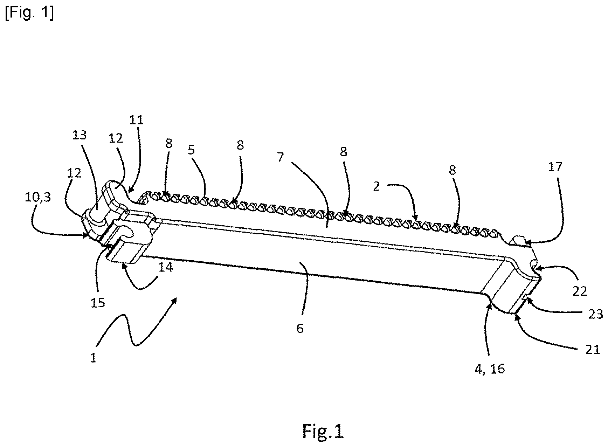

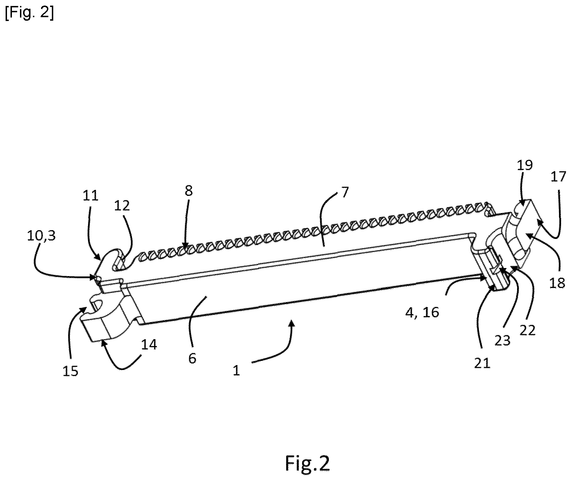

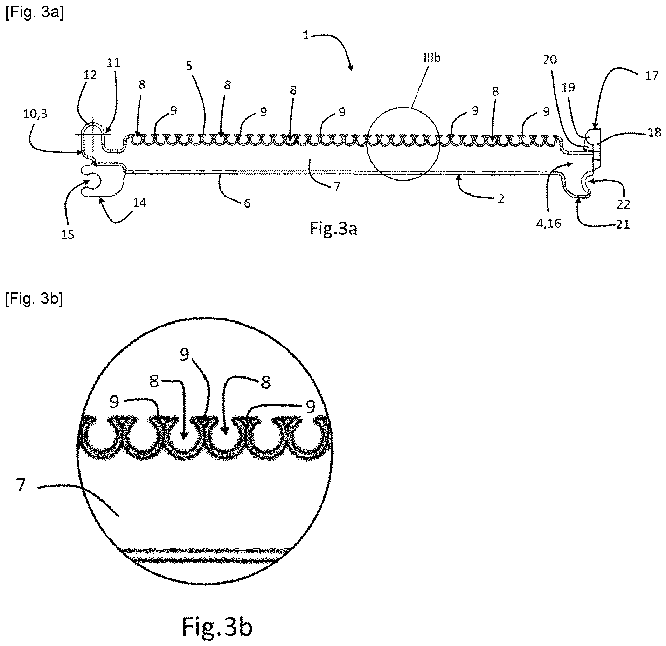

Sur les figures 1 à 3b, une barre 1 d'organisation selon un mode de réalisation conforme à l'invention est représentée. La barre 1 est destinée à faire partie d'un ensemble 100 d'organisation de câbles, qui permet d'identifier et d'organiser en nappes des câbles, notamment dans les data center dans lesquels un grand nombre de câbles est nécessaire, et dans lesquels un mauvais raccordement dû à une mauvaise identification d'un câble peut avoir des conséquences catastrophiques.

La barre 1 comprend un corps 2, s'étendant suivant une direction appelée transversale entre deux portions 3, 4 extrêmes de la barre 1. Le corps 2 présente en outre une surface 5 supérieure et une surface 6 inférieure, opposées l'une à l'autre suivant une direction dite verticale. Enfin, le corps 2 comprend deux faces 7 latérales opposées suivant une direction dite longitudinale.

Les adjectifs transversal, longitudinal et vertical ainsi que leurs variantes sont utilisés ici à des fins de simplifications, et n'impliquent aucune limitation dans l'utilisation de la barre 1 et/ou de l'ensemble 100.

La direction transversale est ici sensiblement perpendiculaire à la direction longitudinale, et la direction verticale est sensiblement perpendiculaire aux deux autres directions, de sorte que le corps 2 est sensiblement de forme parallélépipédique.

La surface 5 supérieure du corps 2 est munie d'au moins deux encoches 8, et en pratique d'une pluralité d'encoches 8, de préférence réparties régulièrement transversalement entre les deux portions 3, 4 extrêmes.

Chaque encoche 8 définit un passage sensiblement longitudinal pour un câble, et comprend au moins un élément de retenue individuelle de chaque câble. Par « retenue », on désigne ici la capacité de l'encoche 8 à maintenir le câble à l'intérieur de l'encoche dans les conditions normales d'utilisation, et à empêcher tout mouvement de translation le long du câble. En outre, les câbles peuvent être maintenus tendus entre deux barres 1 disposés successivement le long des câbles, limitant les risques de formation de noeud et les risques que les câbles s'entremêlent.

Par exemple, à cet effet, chaque encoche 8 présente, dans un plan perpendiculaire à la direction longitudinale, une section sensiblement circulaire ouverte, décrivant un arc de cercle d'angle supérieur à 180°, mais inférieur à 360°, de manière à permettre l'insertion et la retenue d'un câble dans l'encoche. Le diamètre de l'encoche 8 est en outre sensiblement égal, voire même légèrement inférieur, à celui du câble qui est destiné à être inséré dans l'encoche 8. Ainsi, les encoches 8 d'une même barre 1 peuvent présenter le même diamètre, ou avoir des diamètres différents. Les câbles sont insérés à force dans les encoches 8.

Deux encoches 8 adjacentes successives sont ainsi séparées l'une de l'autre par une patte 9, d'épaisseur suffisante à la fois pour assurer une rigidité permettant la retenue d'un câble dans l'encoche 8 correspondante, et pour assurer une élasticité suffisante pour insérer à forceun câble dans l'encoche 8.

De préférence, les pattes 9 ont leurs extrémités libres alignées transversalement sur l'ensemble de la surface 5 supérieure du corps 2 de la barre

La barre 1 est prévue pour être assemblée à d'autres barres.

A cet effet, la première portion 3 extrême de la barre 1 comprend un système 10 de liaison charnière, prévu pour pouvoir former avec deux autres barres 1 deux liaisons charnières.

Notamment, le système 10 de liaison charnière comprend, sur la première portion 3 extrême, du côté de la surface 5 supérieure un premier élément 11 de charnière, de forme cylindrique et formant un axe de rotation pour une liaison charnière. L'axe de rotation est avantageusement longitudinal. Plus précisément, selon l'exemple des figures, le premier élément 11 de charnière comprend deux bras 12 s'étendant transversalement dans le prolongement du corps 2, et reliées l'une à l'autre par une portion 13 cylindrique à section circulaire.

Le système 9 de liaison charnière comprend en outre, sur la première portion 3 extrême, du côté de la surface 6 inférieure, un deuxième élément 14 de charnière, de forme en creux complémentaire de la surface cylindrique, en l'occurrence de la portion 12 cylindrique, du premier élément 10 de charnière.

Plus précisément, le deuxième élément 14 de charnière comprend une encoche 15 ouverte, de section sensiblement circulaire dans un plan perpendiculaire à la direction longitudinale, décrivant un arc de cercle d'angle supérieur à 180°, mais inférieur à 360°, et de diamètre correspondant à celui de la portion cylindrique 13 de sorte que l'encoche 15 est ouverte pour permettre l'insertion à force de la portion 13 cylindrique et sa retenue par encliquetage. L'encoche 15 du deuxième élément 14 de charnière s'étend longitudinalement sur une dimension inférieure ou égale à la dimension longitudinale de la portion 12 cylindrique du premier élément 11 de charnière.

La deuxième portion 4 extrême de la barre 1 comprend quant à elle un système 16 de verrouillage qui comporte, du côté de la surface 5 supérieure, un premier élément 17 de verrouillage en saillie. Plus précisément, selon l'exemple des figures, le premier élément 17 de verrouillage comprend un doigt 18 s'élevant sensiblement verticalement du côté de la surface 5 supérieure et présentant un bourrelet 19 sensiblement cylindrique et orienté vers la première portion 3 extrême ainsi qu'une languette 20.

Le système 16 de verrouillage comprend de plus, du côté de la surface 6 inférieure, un deuxième élément 21 de verrouillage en creux adapté pour retenir le premier élément 17 de verrouillage. Plus précisément, le deuxième élément 21 de verrouillage comprend une encoche 22 ouverte, de section sensiblement circulaire dans un plan perpendiculaire à la direction longitudinale, et décrivant un arc de cercle d'angle inférieur à 180° mais supérieur à 90°. Le diamètre de l'encoche 22 du deuxième élément 21 de verrouillage est sensiblement égal à celui du bourrelet 19 cylindrique. Une fente 23 complémentaire de la languette 20 est également formée sur le deuxième élément 21 de verrouillage.

La barre 1 est de préférence réalisée de manière monobloc, par exemple par toute technique dite impression 3D, et par exemple en PLA. La réalisation monobloc permet de n'avoir qu'une seule étape de fabrication pour la barre 1, sans étape d'assemblage. La fabrication d'une barre s'en trouve facilitée et de coûts réduits.

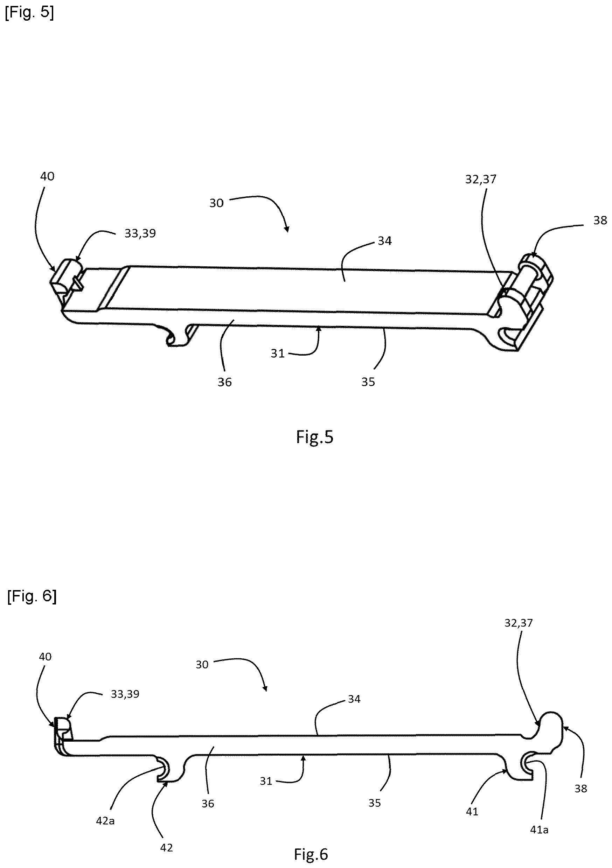

Ainsi, un exemple d'un ensemble 100 d'organisation est représenté sur les figures 5a et 5b. Selon cet exemple, l'ensemble 100 comprend deux barres 1 identiques, ou a minima que leur systèmes 10 de liaison charnière sont compatibles pour former une liaison charnière, et leurs systèmes 16 de verrouillage sont compatibles pour procurer un verrouillage comme décrit ci-dessous. On pourra toutefois prévoir que les barres 1 présentent des différences, par exemple dans le nombre et le forme des encoches 8.

Lorsque l'ensemble comprend deux barres 1, ou toutes les barres 1, identiques, le nombre de références à utiliser pour un assemblage s'en trouve avantageusement réduit à un. L'assemblage est ainsi facilité. Les coûts de gestion de stock sont réduits.

Ainsi, l'élément 12 cylindrique du premier élément 11 de charnière d'une première barre 1 est inséré par encliquetage dans l'encoche 15 du deuxième élément 14 de charnière de la deuxième barre 1, de manière à former une liaison charnière. La deuxième barre 1 peut ainsi pivoter par rapport à la première barre 1 autour de l'axe de la liaison charnière, de sorte que l'assemblage peut prendre deux positions :
- une position fermée, dans laquelle la première barre 1 et la deuxième barre sont sensiblement parallèles, empilées verticalement l'une sur l'autre, la surface 6 inférieure de la deuxième barre 1 recouvrant alors l'ouverture des encoches 8 de la première barre 1 et empêchant des câbles de sortir des encoches 8 de la première barre 1 ;
- une position ouverte, dans laquelle la surface 6 inférieure de la deuxième barre 1 est éloignée de la première barre 1, permettant le retrait des câbles des encoches 8 de la première barre 1.

En position fermée, l'ensemble 100 peut être verrouillé grâce à la mise en oeuvre des systèmes de verrouillage. Ainsi, un premier élément 17 de verrouillage de la première barre 1 est retenu par le deuxième élément 21 de verrouillage de la deuxième barre 1. Plus précisément, l'élasticité du premier élément 17 de verrouillage de la première barre 1 et/ou du deuxième élément 21 de verrouillage de la deuxième barre permet l'insertion à force et la retenue du bourrelet 19 de la première barre 1 dans l'encoche 22 de la deuxième barre 1, la languette 20 de la première barre 1 venant s'insérer dans la fente 23 de la deuxième barre 1.

En position fermée, les câbles placés dans les encoches 8 de la première barre 1 forment une nappe au sein de laquelle la position de chaque câble est maintenue grâce aux éléments de retenues des encoches 8. Avantageusement, la distance entre la surface 6 inférieure de la deuxième barre 1 et l'extrémité libre des pattes 9 de la première barre 1 est telle qu'un câble qui serait malencontreusement sorti de son encoche 8 ne pourrait pas se déplacer transversalement. Quoi qu'il en soit, la coopération entre les éléments de charnière et les éléments de verrouillage des deux barres 1 d'organisation lorsqu'elles sont assemblées garantissent que même lorsqu'un câble sort d'une encoche 8, il reste contenu dans l'espace entre les deux barres 1.

Lorsque les deux barres 1 sont assemblées l'une à l'autre pour former l'ensemble 100 d'organisation, leurs faces 7 latérales sont de préférence coplanaires grâce notamment aux pattes 12 de la première barre 1 enserrant deuxième élément 14 de charnière de la deuxième barre 1 et grâce à la languette 20 de la première barre venant se loger dans la fente 23 de la deuxième barre 1, de sorte qu'une position longitudinale relative déterminée des deux barres 1 assemblées est assurée.

Pour ouvrir l'ensemble 100 d'organisation, un effort manuel ou à l'aide d'un outil est exercé sur l'une des deux barres afin de supprimer la retenue entre les éléments de verrouillage et faire pivoter les barres 1 l'une par rapport à l'autre.

L'ensemble 100 pourra comprendre autant de barres 1 d'organisation que nécessaire. Ainsi, chaque barre 1 retient dans ses encoches des câbles disposés en nappes, facilitant leur identification ainsi que le maintien de leur position et améliorant l'organisation d'un ensemble de câbles.

Lorsqu'une nappe de câbles doit être ajoutée, une barre 1 d'organisation peut facilement être ajoutée à un ensemble préexistant.

En outre, lorsqu'il faut intervenir sur un câble, par exemple pour le changer, il suffit d'ouvrir l'ensemble 100 au niveau de la nappe de câbles à changer, sans toucher aux autres nappes.

L'ensemble 100 garantit ainsi la position de chaque câble au sein d'une nappe, ainsi que la position de chaque nappe au sein de l'ensemble, permettant une organisation de haut niveau des câbles. Par exemple, les barres peuvent être munies de signe permettant de les différencier les unes des autres, tel qu'un code couleur ou des symboles.

L'ensemble 100 est destiné à être fixé sur un support.

Selon un mode de réalisation, la première barre 1 peut être fixée directement sur le chemin de câbles. En effet, les éléments 14 et 21 en creux forment alors un ensemble de fixation, et sont dimensionnés fin de pouvoir venir en prise sur deux fils parallèles du chemin de câbles.

Par exemple, lorsque le support est un chemin de câbles de type fils, l'encoche 15 du deuxième élément 14 de charnière de la première barre peut venir en prise sur un premier fil, et l'encoche 22 du deuxième élément 21 de verrouillage de la première barre peut venir en prise sur un deuxième fils. Eventuellement, la distance entre les deux encoches 15, 22 est légèrement inférieure à la distance entre le deux fils du chemin de câbles, de sorte que la barre 1 est légèrement sous tension lorsqu'elle est fixée sur le chemin de câbles, assurant une bonne tenue.

Selon un autre mode de réalisation, la première barre 1 n'est pas fixée directement sur le chemin de câbles, mais par la mise en oeuvre d'une barre 30 intermédiaire.

De manière similaire à une barre 1 d'organisation, la barre 30 intermédiaire comprend un corps 31 allongé suivant une direction transversale, entre deux portions 32, 33 extrêmes. Le corps présente une surface 34 supérieure et une surface 35 inférieure opposée suivant une direction verticale, ainsi que deux faces 36 latérales opposée suivant la direction longitudinale. Le corps 31 présente ainsi une forme sensiblement parallélépipédique.

Les directions longitudinale, verticale et transversale pour la barre 30 intermédiaire sont confondues avec les mêmes directions pour la barre 1 d'organisation lorsqu'elles sont assemblées.

Sur la première portion 32 extrême du corps 31, la barre 30 intermédiaire comprend, du côté de la surface 34 supérieure, un premier élément 38 de charnière cylindrique formant axe de rotation. Le premier élément 38 de charnière de la barre 30 intermédiaire reprend les caractéristiques déjà décrites pour le premier élément 11 de charnière de la barre 1 d'organisation, et il ne sera pas davantage décrit.

Le système 37 de liaison charnière ne comprend pas de deuxième élément de charnière.

Sur la deuxième portion 33 extrême, la barre 30 intermédiaire comprend, du côté de la surface 34 supérieure, un premier élément 40 de verrouillage en saillie. Le premier élément 40 de verrouillage de la barre 30 intermédiaire reprend les caractéristiques déjà décrites pour le premier élément 17 de verrouillage de la barre 1 d'organisation, et il ne sera pas davantage décrit.

Le premier élément 38 de charnière et le premier élément 40 de verrouillage de la barre 30 intermédiaire sont complémentaires respectivement du deuxième élément 14 de charnière et du deuxième élément 21 de verrouillage de la barre 1 d'organisation.

Du côté de la surface 35 inférieure, la barre 30 intermédiaire comprend deux griffes 41, 42, disposées entre les deux portions 32, 33 extrême. Plus précisément, une première griffe 41 s'étend depuis la surface 35 inférieure en direction de la première portion 32 extrêmes et la deuxième griffe 42 s'étend depuis la surface 35 inférieure en direction de la deuxième portion 33 extrême, les deux griffes 41, 42 s'étendant à l'opposé l'une de l'autre.

Chaque griffe 41, 42 forme un renfoncement, respectivement 41a, 42a, pour venir en prise avec un élément d'un support.

Par exemple, lorsque le support est un chemin de câbles de type fils, les renfoncements 41a, 42a sont de section circulaire dans un plan perpendiculaire à la direction longitudinale, décrivant un arc d'angle inférieur à 180°. La distance entre les renfoncements 41a, 42a est légèrement inférieure à la distance entre deux fils du chemin de câbles, de sorte que pour mettre les griffes 41, 42 en prise chacune sur un fil du chemin de câbles, la barre 30 intermédiaire est mise sous tension par déformation élastique.

Ainsi, un ensemble 100 d'organisation peut comprendre une barre 30 intermédiaire, sur laquelle une première barre 1 d'organisation est assemblée par encliquetage du deuxième élément 1 de charnière de la première barre 1 d'organisation sur le premier élément 38 de charnière de la barre 30 intermédiaire. Les griffes 41, 42 de la barre 30 intermédiaire peuvent alors être en prise avec par exemple deux fils d'un chemin de câbles, assurant la fixation de l'ensemble 100 sur le support.

La barre 30 intermédiaire permet ainsi de s'affranchir, pour la barre 1 d'organisation, des contraintes liées à la fixation sur le support. En effet, par exemple, comme décrit plus haut, le deuxième élément 14 de charnière de la barre 1 d'organisation doit pouvoir s'adapter sur un élément du support et sur le premier élément 1 de charnière d'une autre barre 1 d'organisation, de sorte que les dimensions de l'élément de support conditionnent les dimensions des éléments 11, 14 de charnière de la barre 1 d'organisation.

La barre 30 intermédiaire permet ainsi d'avoir plus de liberté dans les dimensions, notamment celles des éléments 11, 14 de charnière, ainsi que celles des éléments 17, 21 de verrouillage de la barre 1 d'organisation.

Il peut en outre être prévu des concevoir des barre 30 intermédiaires pour s'adapter à différents format de supports, tout en conservant des barres 1 d'organisation de dimensions standards.

La barre 30 intermédiaire est de préférence dépourvue d'encoches, car elle n'a pas pour fonction de former un passage pour les câbles. Elle est ainsi plus facile à fabriquer, moins coûteuse, et se distingue aisément à l'oeil des autres barres 1.

Comme pour la barre 1 d'organisation, la barre 30 intermédiaire est de préférence monobloc, par exemple réalisée en PLA, par toute technique d'impression 3D.

L'ensemble 100 d'organisation permet ainsi d'organiser en nappes des câbles facilement, à moindre coûts, et en garantissant une position pour chaque câbles au sein d'une nappe, et la position de chaque nappe au sein de l'ensemble.

## Revendications

1. Barre (1) d'organisation de câbles en nappe, la barre (1) comprenant un corps (2) allongé suivant une direction transversale entre deux portions (3, 4) extrêmes, le corps (2) présentant une surface (5) supérieure et une surface (6) inférieure, au moins l'une de la surface (5) supérieure ou de la surface (6) inférieure comprenant au moins deux encoches (8), chaque encoche (8) formant passage sensiblement longitudinal pour un câble, la barre (1) étant **caractérisée en ce qu'**elle comprend en outre :
- sur une première portion (3) extrême, un système (10) de liaison charnière qui comporte du côté de la surface (5) supérieure, un premier élément (11) de charnière cylindrique formant axe de rotation et qui comporte, du côté de la surface (6) inférieure, un deuxième élément (14) de charnière en creux complémentaire du premier élément (11) de charnière, adapté pour s'engager sur le premier élément (11) de charnière par encliquetage ;
- sur la deuxième portion (4) extrême, un système (16) de verrouillage qui comporte du côté de la surface (5) supérieure un premier élément (17) de verrouillage en saillie et qui comporte du côté de la surface (6) inférieure un deuxième élément (21) de verrouillage en creux adapté pour venir en prise avec le premier élément (17) de verrouillage ;
de sorte qu'un premier élément (11) de charnière d'une première barre (1) peut être assemblé par encliquetage sur un deuxième élément (14) de charnière d'une deuxième barre (1), et un premier élément (17) de verrouillage de la première barre (1) peut être retenu par un deuxième élément (21) de verrouillage de la deuxième barre (1), pour former un ensemble d'organisation de câbles.

2. Barre (1) d'organisation selon la revendication 1, dans laquelle le deuxième élément (14) de charnière et le deuxième élément (21) de verrouillage, en creux, forment un ensemble de fixation sur des fils d'un chemin de câbles.

3. Barre (1) selon l'une quelconque des revendications 1 à 2, dans laquelle les encoches (8) comprennent au moins un élément de retenue individuelle de chaque câble dans l'encoche (8).

4. Barre (1) selon l'une quelconque des revendications 1 à 3, dans laquelle l'axe de rotation du système (10) de liaison charnière s'étend dans une direction longitudinale.

5. Barre (1) selon l'une quelconque des revendications 1 à 4, dans laquelle elle est monobloc.

6. Barre (1) selon l'une des revendications 1 à 5, dans laquelle elle est réalisée en PLA.

7. Ensemble (100) d'organisation de câbles comprenant au moins une première barre (1) et une deuxième barre (1) d'organisation, les deux barres (1) étant selon l'une quelconque des revendications précédentes, dans lequel le premier élément (11) de charnière d'une première barre (1) est assemblé par encliquetage sur le deuxième élément (14) de charnière d'une deuxième barre (1), l'ensemble (100) d'organisation pouvant prendre, par rotation autour de l'axe de rotation de la liaison charnière :
- une position fermée verrouillée, dans laquelle la première barre (1) et la deuxième barre (1) sont sensiblement parallèles, le premier élément (17) de verrouillage de la première barre (1) étant retenu par le deuxième élément (21) de verrouillage de la deuxième barre (1) ;
- une position ouverte, dans laquelle la surface (6) inférieure de la deuxième barre (1) est éloignée de la première barre (1).

8. Ensemble (100) d'organisation de câbles selon la revendication précédente, comprenant en outre une barre (30) intermédiaire destinée à être fixée sur un support, la barre (30) intermédiaire comprenant un corps (31) allongé suivant une direction transversale entre deux portions(32, 33) extrêmes, le corps (31) présentant une surface (34) supérieure et une surface (35) inférieure, la barre (30) intermédiaire comprenant en outre :
- sur une première portion (32) extrême, du côté de la surface (34) supérieure, un premier élément (38) de charnière cylindrique formant axe de rotation ;
- sur la deuxième portion (33) extrême, du côté de la surface (34) supérieure, un premier élément (40) de verrouillage en saillie ;
- deux griffes (41, 42) de fixation en creux, s'étendant à partir de la surface (35) inférieure, placées entre les deux portions (32, 33) extrêmes, destinées à venir en prise chacune avec un élément d'un support de câbles ;
ledit ensemble (100) d'organisation dans lequel le deuxième élément (14) de charnière de la première barre (1) est assemblé sur le premier élément (38) de charnière de la barre (30) intermédiaire, et le deuxième élément (21) de verrouillage de la première barre (1) est retenu sur le premier élément (40) de verrouillage de la barre (30) intermédiaire.

9. Ensemble (100) d'organisation selon la revendication précédente, dans lequel la barre (30) intermédiaire est dépourvue d'encoches formant passage pour des câbles.

10. Procédé d'assemblage d'un ensemble (100) d'organisation sur un support selon l'une quelconques des revendications 7 à 9, comprenant :
- La fixation sur le support d'une première barre (1) d'organisation,
- L'encliquetage du premier élément (11) de charnière d'une deuxième barre (1) d'organisation sur le deuxième élément (14) de charnière de la première barre (1) d'organisation, de manière à former une liaison charnière.

11. Procédé d'assemblage selon la revendication 10, dans lequel le support est un chemin de câbles de type fils, et dans lequel la fixation de la première barre (1) sur le support comprend la mise en prise du deuxième élément (14) de charnière sur un premier fil du chemin de câbles et la mise en prise du deuxième élément (21) de verrouillage de la première barre (1) sur un deuxième fil du chemin de câbles.

12. Procédé d'assemblage selon la revendication 10, lorsqu'elle dépend de la revendication 8 ou de la revendication 9, dans lequel le support est un chemin de câbles de type fils, et dans lequel l'étape de fixation de la première barre (1) comprend :
- la mise en prise des griffes (41,42) de fixation de la barre (30) intermédiaire sur des fils du chemin de câbles ;
- l'encliquetage du premier élément (38) de charnière de la barre (30) intermédiaire sur le deuxième élément (14) de charnière de la première barre (1) d'organisation ;
- l'encliquetage du premier élément (40) de verrouillage de la barre (30) intermédiaire sur le deuxième élément (21) d'encliquetage de la première barre (1) d'organisation.

## Patentansprüche

1. Kabelführungsleiste (1) für Flachbandkabel, wobei die Leiste (1) einen Körper (2) umfasst, der in einer Querrichtung zwischen zwei Endabschnitten (3, 4) verläuft, wobei der Körper (2) eine obere Fläche (5) und eine untere Fläche (6) aufweist, wobei die obere Fläche (5) und/oder die untere Fläche (6) mindestens zwei Kerben (8) umfasst/-en, wobei jede Kerbe (8) einen im Wesentlichen longitudinalen Durchgang für ein Kabel bildet, wobei die Leiste (1) **dadurch gekennzeichnet ist, dass** sie außerdem Folgendes umfasst:
- an einem ersten Endabschnitt (3) ein Scharnierverbindungssystem (10), das auf der Seite der oberen Fläche (5) ein erstes zylindrisches Scharnierelement (11) aufweist, das eine Drehachse bildet, und das auf der Seite der unteren Fläche (6) ein zweites vertieftes Scharnierelement (14) komplementär zum ersten Scharnierelement (11) aufweist, ausgelegt zum Eingreifen mit dem ersten Scharnierelement (11) durch Verrasten;
- an dem zweiten Endabschnitt (4) ein Verriegelungssystem (16), das auf der Seite der oberen Fläche (5) ein erstes vorstehendes Verriegelungselement (17) aufweist und das auf der Seite der unteren Fläche (6) ein zweites vertieftes Verriegelungselement (21) aufweist, ausgelegt zum Ineingriffkommen mit dem ersten Verriegelungselement (17);
so dass ein erstes Scharnierelement (11) einer ersten Leiste (1) durch Verrasten mit einem zweiten Scharnierelement (14) einer zweiten Leiste (1) zusammengebaut werden kann und ein erstes Verriegelungselement (17) der ersten Leiste (1) durch ein zweites Verriegelungselement (21) der zweiten Leiste (1) festgehalten werden kann, um eine Kabelführungsanordnung zu bilden.

2. Führungsleiste (1) nach Anspruch 1, wobei das zweite Scharnierelement (14) und das vertiefte zweite Verriegelungselement (21) eine Anordnung zur Befestigung an Drähten eines Kabelkanals bilden.

3. Leiste (1) nach einem der Ansprüche 1 bis 2, wobei die Kerben (8) mindestens ein Element zum individuellen Festhalten jedes Kabels in der Kerbe (8) umfassen.

4. Leiste (1) nach einem der Ansprüche 1 bis 3, wobei sich die Drehachse des Scharnierverbindungssystems (10) in einer Längsrichtung erstreckt.

5. Leiste (1) nach einem der Ansprüche 1 bis 4, wobei sie einstückig ist.

6. Leiste (1) nach einem der Ansprüche 1 bis 5, wobei sie aus PLA hergestellt ist.

7. Kabelführungsanordnung (100) mit mindestens einer ersten (1) und einer zweiten (1) Führungsleiste, wobei die beiden Leisten (1) nach einem der vorherigen Ansprüche ausgebildet sind, wobei das erste Scharnierelement (11) einer ersten Leiste (1) durch Verrasten mit dem zweiten Scharnierelement (14) einer zweiten Leiste (1) zusammengebaut ist, wobei die Führungsanordnung (100) durch Drehung um die Drehachse der Scharnierverbindung eine der folgenden Positionen einnehmen kann:
- eine verriegelte, geschlossene Position, in der die erste Leiste (1) und die zweite Leiste (1) im Wesentlichen parallel sind, wobei das erste Verriegelungselement (17) der ersten Leiste (1) durch das zweite Verriegelungselement (21) der zweiten Leiste (1) festgehalten wird;
- eine offene Position, in der die untere Fläche (6) der zweiten Leiste (1) von der ersten Leiste (1) entfernt ist.

8. Kabelführungsanordnung (100) nach dem vorherigen Anspruch, die ferner eine Zwischenleiste (30) zur Befestigung an einem Träger umfasst, wobei die Zwischenleiste (30) einen Körper (31) umfasst, der in einer Querrichtung zwischen zwei Endabschnitten (32, 33) verläuft, wobei der Körper (31) eine obere Fläche (34) und eine untere Fläche (35) aufweist, wobei die Zwischenleiste (30) ferner Folgendes umfasst:
- an einem ersten Endabschnitt (32), auf der Seite der oberen Fläche (34), ein erstes zylindrisches Scharnierelement (38), das eine Drehachse bildet;
- an dem zweiten Endabschnitt (33), auf der Seite der oberen Fläche (34), ein erstes vorstehendes Verriegelungselement (40);
- zwei vertiefte Befestigungsklauen (41, 42), die sich von der unteren Fläche (35) aus erstrecken und zwischen den beiden Endabschnitten (32, 33) platziert sind, die jeweils mit einem Element eines Kabelträgers in Eingriff kommen sollen;
die genannte Führungsanordnung (100), bei der das zweite Scharnierelement (14) der ersten Leiste (1) auf das erste Scharnierelement (38) der Zwischenleiste (30) zusammengebaut ist und das zweite Verriegelungselement (21) der ersten Leiste (1) am ersten Verriegelungselement (40) der Zwischenleiste (30) festgehalten wird.

9. Führungsanordnung (100) nach dem vorherigen Anspruch, wobei die Zwischenleiste (30) keine Kerben aufweist, die einen Durchgang für Kabel bilden.

10. Verfahren zum Zusammenbau einer Führungsanordnung (100) auf einem Träger nach einem der Ansprüche 7 bis 9, das Folgendes beinhaltet:
- Befestigen einer ersten Führungsleiste (1) an dem Träger,
- Verrasten des ersten Scharnierelements (11) einer zweiten Führungsleiste (1) mit dem zweiten Scharnierelement (14) der ersten Führungsleiste (1), um eine Scharnierverbindung zu bilden.

11. Zusammenbauverfahren nach Anspruch 10, wobei der Träger ein Kabelkanal vom Drahttyp ist und wobei das Befestigen der ersten Leiste (1) am Träger das Ineingriffbringen des zweiten Scharnierelements (14) mit einem ersten Draht des Kabelkanals und das Ineingriffbringen des zweiten Verriegelungselements (21) der ersten Leiste (1) mit einem zweiten Draht des Kabelkanals beinhaltet.

12. Zusammenbauverfahren nach Anspruch 10 in Abhängigkeit von Anspruch 8 oder Anspruch 9, wobei der Träger ein Kabelkanal vom Drahttyp ist und wobei der Schritt des Befestigens der ersten Leiste (1) Folgendes beinhaltet:
- Ineingriffbringen der Klauen (41, 42) zur Befestigung der Zwischenleiste (30) mit Drähten des Kabelkanals;
- Verrasten des ersten Scharnierelements (38) der Zwischenleiste (30) mit dem zweiten Scharnierelement (14) der ersten Führungsleiste (1);
- Verrasten des ersten Verriegelungselements (40) der Zwischenleiste (30) mit dem zweiten Verrastungselement (21) der ersten Führungsleiste (1).

## Claims

1. Strip(1) for organizing cables into a layer, the strip (1) comprising a body (2) lying in a transverse direction between two end portions (3, 4), the body (2) having an upper surface (5) and a lower surface (6), at least one out of the upper surface (5) and the lower surface (6) comprising at least two slots (8), each slot (8) forming a substantially longitudinal passage for a cable, the strip (1) being **characterized in that** it also comprises:
- on a first end portion (3), a hinge connection system (10), which includes, on the side of the upper surface (5), a first cylindrical hinge element (11) forming an axis of rotation and which includes, on the side of the lower surface (6), a second depressed hinge element (14) that complements the first hinge element (11), adapted to engage on the first hinge element (11) by clicking;
- on the second end portion (4), a locking system (16), which includes, on the side of the upper surface (5), a first projecting locking element (17) and which includes, on the side of the lower surface (6), a second depressed locking element (21) adapted to come into engagement with the first locking element (17);
such that a first hinge element (11) of a first strip (1) can be assembled by clicking onto a second hinge element (14) of a second strip (1), and a first locking element (17) of the first strip (1) can be held by a second locking element (21) of the second strip (1), in order to form an assembly for organizing cables.

2. Strip (1) for organizing according to claim 1, in which the second hinge element (14) and the second locking element (21), which are depressed, form an assembly for fastening on wires of a cable tray.

3. Strip (1) according to any one of claims 1 to 2, in which the slots (8) comprise at least one individual retaining element for each cable in the slot (8).

4. Strip (1) according to any one of claims 1 to 3, in which the axis of rotation of the hinge connection system (10) extends in a longitudinal direction.

5. Strip (1) according to any one of claims 1 to 4, in which it is made in one piece.

6. Strip (1) according to one of claims 1 to 5, in which it is made of PLA.

7. Assembly (100) for organizing cables comprising at least one first strip (1) and a second strip (1) for organization, the two strips (1) being according to any one of the preceding claims, in which the first hinge element (11) of a first strip (1) is assembled by clicking onto the second hinge element (14) of a second strip (1), the assembly (100) for organizing being able to adopt, by rotation about the axis of rotation of the hinge connection:
- a locked closed position, in which the first strip (1) and the second strip (1) are substantially parallel, the first locking element (17) of the first strip (1) being held by the second locking element (21) of the second strip (1);
- an open position, in which the lower surface (6) of the second strip (1) is moved away from the first strip (1).

8. Assembly (100) for organizing cables according to the preceding claim, further comprising an intermediate strip (30) intended to be fastened on a support, the intermediate strip (30) comprising a body (31) lying in a transverse direction between two end portions (32, 33), the body (31) having an upper surface (34) and a lower surface (35), the intermediate strip (30) also comprising:
- on a first end portion (32), on the side of the upper surface (34), a first cylindrical hinge element (38) forming an axis of rotation;
- on the second end portion (33), on the side of the upper surface (34), a first projecting locking element (40);
- two depressed fastening claws (41, 42), extending from the lower surface (35), placed between the two end portions (32, 33), each intended to come into engagement with an element of a cable support;
said assembly (100) for organizaing, in which the second hinge element (14) of the first strip (1) is assembled onto the first hinge element (38) of the intermediate strip (30) and the second locking element (21) of the first strip (1) is held on the first locking element (40) of the intermediate strip (30).

9. Assembly (100) for organizing according to the preceding claim, in which the intermediate strip (30) does not have slots forming a passage for cables.

10. Method for assembling an assembly (100) for organizing on a support according to any one of claims 7 to 9, comprising:
- fastening a first strip (1) for organizing on the support,
- clicking the first hinge element (11) of a second strip (1) for organizing onto the second hinge element (14) of the first strip (1) for organizing, so as to form a hinge connection.

11. Method for assembling according to claim 10, in which the support is a wire-type cable tray, and in which the fastening of the first strip (1) on the support comprises bringing the second hinge element (14) into engagement on a first wire of the cable tray and bringing the second locking element (21) of the first strip (1) into engagement on a second wire of the cable tray.

12. Method for assembling according to claim 10, when it is dependent on claim 8 or on claim 9, in which the support is a wire-type cable tray, and in which the step of fastening the first strip (1) comprises:
- bringing the fastening claws (41, 42) of the intermediate strip (30) into engagement on wires of the cable tray;
- clicking the first hinge element (38) of the intermediate strip (30) onto the second hinge element (14) of the first strip (1) for organizing;
- clicking the first locking element (40) of the intermediate strip (30) onto the second clicking element (21) of the first strip (1) for organizing.
